# EUROPÄISCHE PATENTSCHRIFT

(11) **EP 0 360 924 B1**
(45) Veröffentlichungstag und Bekanntmachung des Hinweises auf die Patenterteilung: **29.12.1993**
(21) Anmeldenummer: 88117045.0
(22) Anmeldetag: 13.10.1988
(51) Int. Cl.: H04Q 11/04

(54) **Verfahren zum Betrieb von taktgesteuerten Zeitmultiplex-Fernmeldevermittlungsanlagen, insbesondere PCM-Fernsprechvermittlungsanlagen, mit Zentralkoppelfeld und angeschlossenen Teilkoppelfeldern**
Method for operating pulse-controlled time division telecommunication exchanges, especially PCM telephone exchanges, with distributed switching networks connected to a central switching network
Procédé de contrôle de centraux de télécommunications à division dans le temps commandés par horloge, en particulier des centraux téléphoniques MIC avec des réseaux de commutation distribués, connectés à un réseau de commutation central

(30) Priorität: 29.09.1988 DE 3833078; 29.09.1988 DE 3833074; 22.09.1988 DE 3832242; 23.09.1988 DE 3832425
(43) Veröffentlichungstag der Anmeldung: 04.04.1990
(73) Patentinhaber: SIEMENS AKTIENGESELLSCHAFT, 80333 München (DE)
(72) Erfinder: Nagler, Werner, D-8021 Hohenschäftlarn (DE); Hlawa, Fritz, D-8024 Deisenhofen (DE); Schmidt, Lothar, D-8080 Fürstenfeldbruck (DE)

(56) Entgegenhaltungen:
- EP-A- 0 057 758
- EP-A- 0 125 602
- EP-A- 0 311 018

## Beschreibung

Die Erfindung betrifft ein Verfahren zum Betrieb von taktgesteuerten Fernmeldevermittlungsanlagen, insbesondere PCM-Fernsprechvermittlungsanlagen, mit hierarchischem Aufbau mit zentralem Koppelfeld, zentralem Prozessor, mit an jenes über Linkverbindungen angeschlossenen, einer Anschaltung von Teilnehmer- und/oder Verbindungsleitungen, bzw. -kanälen, dienenden Teilkoppelfeldern und mit diesen zugeordneten teilzentralen Steuerwerken und mit einem Taktversorgungssystem, in dem von einem dem Prozessor zugeordneten zentralen und für dessen taktgesteuerte Funktionsabläufe maßgebenden Taktimpulsgenerator den Steuerwerken einzeln zugeordnete, der Regenerierung der Taktimpulse dienende und für die taktimpulsgesteuerten Funktionsabläufe in jedem der Steuerwerke maßgebende Taktimpulssender ihren Master-Takt erhalten, indem sie den letzteren jeweils aus dem impulstaktgesteuert übertragenen Nachrichtenstrom der über das Koppelfeld und über die Teilkoppelfelder verlaufenden Verbindungen ableiten und regenerieren, und mit einer paarweisen Zuordnung der Teilkoppelfelder, wobei im Normalbetrieb gesondert über das eine bzw. das andere der beiden führende Verbindungswege bei Wechsel auf Ersatzschaltbetrieb umschaltbar sind von einem der beiden Teilkoppelfelder zum jeweiligen Partner-Teilkoppelfeld, über das dann alle Verbindungswege führen.

Eine Schaltungsanordnung dieser Art ist bereits in der europäischen Patentanmeldung EP-A1 0 254 855 dargestellt und beschrieben. In diesem bekannten Falle sind pro Teilkoppelfeld Anschlußeinrichtungen vorgesehen, die zum Anschluß von Teilnehmer- und Verbindungsleitungen dienen. Hierbei kann es sich auch um entsprechende Kanäle, bzw. Kanalsysteme handeln. Diese Anschlußeinrichtungen, die zum Anschluß dieser Leitungen dienen, sind im Normalbetrieb über entsprechende Verbindungswege mit dem Teil-Verbindungswege mit dem Teilkoppelfeld verbunden, dem sie zugeordnet sind. Es sind nun Verbindungswege vorgesehen, die von den Anschlußeinrichtungen einer Anschlußgruppe zu dem Teilkoppelfeld derselben Anschlußgruppe führen, sowie Verbindungswege, die von diesen Anschlußeinrichtungen zu dem Teilkoppelfeld der jeweiligen Partner-Anschlußgruppe führen. Ferner ist in diesem bekannten Falle vorgesehen, beim Übergang vom Normalbetrieb in den Ersatzschaltbetrieb die Anschlußeinrichtungen einer Anschlußgruppe - und damit auch die an sie angeschlossenen Teilnehmer- und Verbindungsleitungen - vom zugeordneten Teilkoppelfeld, also von dem Teilkoppelfeld der gleichen Anschlußgruppe zu dem Teilkoppelfeld der jeweiligen Partner-Anschlußgruppe umzuschalten. Dadurch wird ermöglicht, bei Ausfall des Teilkoppelfeldes einer Anschlußgruppe oder ihres Gruppensteuerwerkes die an deren Teilkoppelfeld über die betreffende Anschlußeinrichtung angeschlossenen Teilnehmer-und Verbindungsleitungen weiter zu betreiben, indem die erforderlichen Verbindungen im Ersatzschaltbetrieb über das Teilkoppelfeld der jeweiligen Partner-Anschlußgruppe hergestellt werden.

In Schaltungsanordnungen der bekannten Art ist die Taktversorgung hierarchisch aufgebaut. Von dem genannten zentralen Prozessor bestehen Daten- und Steuerverbindungen zum Gruppensteuerwerk einer jeden Anschlußgruppe. Diese sind nicht zu verwechseln mit Datenverbindungen, die von Teilnehmern gewählt und aufgebaut werden. Es handelt sich vielmehr um Verbindungen zum Datenaustausch zwischen den Gruppensteuerwerken einerseits und dem zentralen Prozessor andererseits. Diese Verbindungen dienen im wesentlichen auch zur Steuerung der Gruppensteuerwerke durch den zentralen Prozessor. Diese Verbindungen werden in der durch die deutsche Offenlegungsschrift 3 106 903 (VPA 81 P 6209) bekannten Art über das zentrale Koppelfeld hergestellt und verlaufen über dasselbe zu allen Anschlußgruppen. Über diese Verbindungen steht der zentrale Prozessor mit den Gruppensteuerwerken in einem beständigen Datenaustausch. Diese Verbindungen dienen u.a. auch dazu, einen in einem zentralen Taktgenerator des zentralen Prozessors erfolgten Master-Takt ständig zu den Gruppensteuerwerken der Anschlußgruppen hin zu transportieren. Hierzu sei auf die deutsche Offenlegungsschrift 31 11 022 (VPA 81 P 6224) hingewiesen. - Impulstaktsender an verschiedenen Stellen entnehmen dem laufenden Datenstrom den Takt, synchronisieren sich auf diesen auf und regenerieren die Taktimpulse. Dies betrifft außer den einzelnen Taktimpulsen auch ein einen Pulsrahmenbeginn markierendes Pulsrahmenkennungsbit. Regeneriert werden also die Taktimpuls im Zusammenhang der ganzen Pulsrahmenstruktur.

Im Zuge der Übertragung des Master-Taktes von dem zentralen Taktgenerator des zentralen Prozessors zu den Gruppensteuerwerken ergeben sich Laufzeitunterschiede und Laufzeitschwankungen. Dies ist bedingt durch unterschiedliche Längen der jeweils durchgeschalteten Verbindungswege über das Koppelfeld, ferner durch unterschiedliche Leitungslängen zwischen Koppelfeld und den verschiedenen Anschlußgruppen, ferner durch Fertigungstoleranzen und weitere Einflüsse dieser Art.

Bei den Anordnungen bekannter Art besteht das Problem von Laufzeitunterschieden und -schwankungen im Zusammenhang mit den angegebenen Umschaltevorgängen. Werden Teilnehmer- und/oder Verbindungsleitungen, die zunächst mit einem Teilkoppelfeld verbunden sind, zum jeweiligen Partner-Teilkoppelfeld umgeschaltet, so können Phasenunterschiede bezüglich des Impulstaktes sich bemerkbar machen, der in dem einen Teilkoppelfeld und in dem anderen Teilkoppelfeld jeweils die taktgesteuerten Schaltungsabläufe bestimmt. Hinsichtlich des Impulstaktes können Unterschiede bestehen zwischen Teilkoppelfeld und Partner-Teilkoppelfeld sowohl hinsichtlich des Phasenunterschiedes von einander entsprechenden Impulsflanken als auch hinsichtlich des oben erwähnten Pulsrahmens. Werden nun Umschaltevorgänge ohne Rücksicht auf diese Probleme durchgeführt, so gibt es Störungen in den entsprechenden Verbindungen. Es können Pulsrahmen verstümmelt werden oder ganze Impulsrahmen können verloren gehen. Ebenso kann bei einem Auftreten von durch Umschaltevorgänge hervorgerufenen Phasensprüngen ein stets erneutes Einsynchronisieren entsprechender Impulstaktsender erforderlich werden und dadurch eine störende Unstetigkeit in das gesamte Taktsystem hineingebracht werden.

Für die Erfindung besteht die Aufgabe, ein Verfahren zum Betrieb einer Schaltungsanordnung der eingangs angegeben Art anzugeben, mit dessen Hilfe die oben beschriebenen Umschaltevorgänge ohne Störungen hinsichtlich der gesamten Taktsteuerung abgewickelt werden können.

Die Erfindung löst diese Aufgabe mittels der im Kennzeichen des Patentanspruchs 1 angegebenen Verfahrensschritte.

In Schaltungsanordnungen der bekannten Art besteht also ganz allgemein das Problem der Umschaltung im Zusammenhang vom Übergang vom Normalbetrieb in den Ersatzschaltbetrieb. In Anordnungen der bekannten Art besteht darüber hinaus aber noch das weitere Problem, daß bei einer Umschaltung der an ein Teilkoppelfeld über die betreffenden Anschlußeinrichtungen angeschlossenen Teilnehmer- und Verbindungsleitungen diejenigen (individuell belegbaren) Verbindungswege von einer etwa doppelten Verkehrslast getroffen werden, die zwischen dem Teilkoppelfeld einer Anschlußgruppe und dem zentralen Koppelfeld verlaufen. Im Gegensatz dazu bleiben bei einer Umschaltung diejenigen Verbindungswege unbenutzt, die zwischen dem entsprechenden Teilkoppelfeld und dem zentralen Koppelfeld verlaufen, das heißt alao die vom zentralen Koppelfeld zu demjenigen Teilkoppelfeld hin verlaufenden Verbindungswege, welches im Zuge der Ersatzschaltung außer Betrieb genommen worden ist, indem die an dieses Teilkoppelfeld über die betreffenden Anschlußeinrichtungen angeschlossenen Teilnehmer- und Verbindungsleitungen im Zuge der Ersatzschaltung zu dem Teilkoppelfeld der jeweiligen Partner- Anschlußgruppe umgeschaltet wurde.

Für die Erfindung besteht deshalb zugleich die Aufgabe, im Zusammenhang mit einer Umschaltung in einer Schaltungsanordnung der eingangs angegebenen Art die Verkehrsbelastung zwischen dem betreffenden Teilkoppelfeld und dem zentralen Koppelfeld auf ein praktisch gut realisierbares Maß zu bringen und dabei auch jegliche Störungen hinsichtlich der taktgesteuerten Nachrichtenübertragung zu vermeiden.

Die Erfindung löst diese Aufgabe durch die im Kennzeichen des Patentanspruchs 4 angegebenen Merkmale.

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

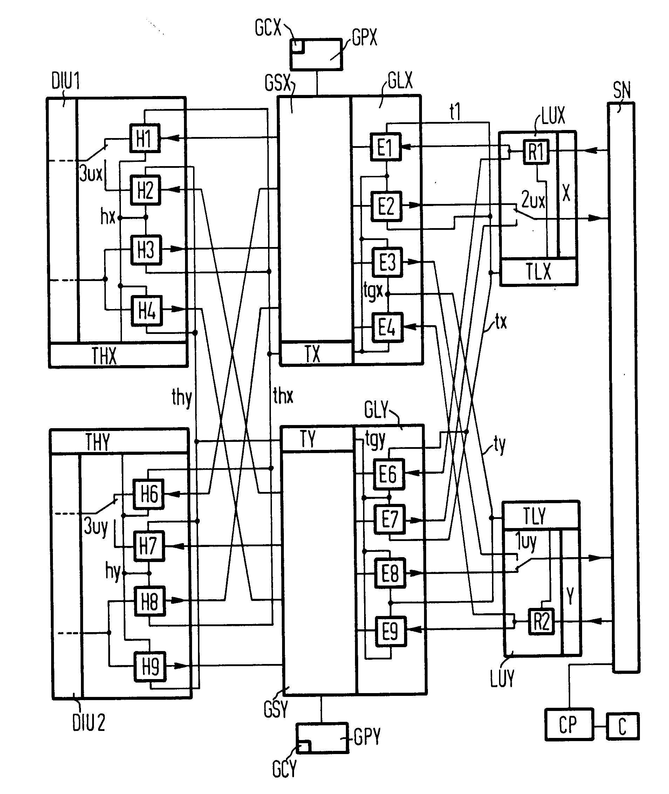

In der Zeitschrift "telcom report", Beiheft des vierten Jahrgangs (1981) ist das Digitalvermittlungssystem EWSD beschrieben. Hiervon ausgehend beschreibt die europäische Patentanmeldung EP-A1 0 254 855 weitere Einzelheiten, welche die in dem genannten Beiheft bereits beschriebenen Anschlußgruppen betreffen. In der Zeichnung sind nun weitere Einzelheiten hierüber dargestellt. Die in FIG 2 der genannten EP-A1 0 254 855 dargestellten je vier Anschlußeinrichtungen pro Anschlußgruppe sind in der Zeichnung wie eine einzige Anschlußeinrichtung DIU1 bzw. DIU2 wiedergegeben. Je ein Teilkoppelfeld pro Anschlußgruppe ist in der Zeichnung anlehnend an die in der genannten EP-A1 0 254 855 gewählte Bezeichnungsweise mit "GSX" und "GSY" bezeichnet. Diese Kurzbezeichnungen sind in Anlehnung an die Darstellung in Bild 1 auf Seite 21 des genannten Beiheftes gewählt. Das zentrale Koppelfeld SN in der Zeichnung entspricht dem zentralen Koppelfeld K1 in FIG 1 der genannten EP-A1 0 254 855 und dem Koppelnetz in Bild 1 auf Seite 21 des genannten Beiheftes, das in Bild 4 auf Seite 23 dieses Beiheftes mit "SN" bezeichnet ist.

In der Zeichnung sind Bestandteile zweier Anschlußgruppen dargestellt, und zwar von einer ersten Anschlußgruppe eine Anschlußeinrichtung DIU1, ein Teilkoppelfeld GSX und eine Linkumschalteinrichtung LUX. Es gibt Anschlußeinrichtungen (im genannten Beiheft mit "Anschlußeinheiten" bezeichnet) für Digitalübertragungssysteme, sowie solche für Analogleitungen. Diese Anschlußeinrichtungen sind in der Zeichnung gemeinsam mit "DIU" bezeichnet. Zu einer ersten Anschlußgruppe gehören also die Anschlußeinrichtungen DIU1, das Teilkoppelfeld GSX mit einem teilzentralen Steuerwerk GPX und die bereits genannte Linkumschalteinrichtung LUX. Entsprechendes gilt für eine zweite Anschlußgruppe, zu der die Anschlußeinheiten DIU2, das Teilkoppelfeld GSY mit dem teilzentralen Steuerwerk GPY und die Linkumschalteinrichtung LUY gehören. - Außerdem ist auch noch ein zentraler Prozessor CP vorgesehen, der in dem genannten Beiheft, z.B. in Bild 1 und Bild 2 auf den Seiten 8 und 9, ebenso bezeichnet ist. Ein solcher Prozessor ist auch in der genannten EP-A1 0 254 855 dargestellt und beschrieben, und zwar dupliziert, und ist hier mit "ZW2" bezeichnet.

Wie in den genannten Literaturstellen bereits ausführlich beschrieben ist, baut der zentrale Prozessor über das zentrale Koppelfeld Datenverbindungen auf, und zwar je eine zu jedem der teilzentralen Steuerwerke jeder der Anschlußgruppen. Diese Datenverbindungen sind nicht zu verwechseln mit individuellen Datenverbindungen, die von Teilnehmern gewählt werden. Die vom zentralen Prozessor aufgebauten Datenverbindungen dienen zum Hereinholen von Informationen von den Anschlußgruppen und zur Abgabe von Steuerinformationen vom zentralen Prozessor an die teilzentralen Steuerwerke. Die teilzentralen Steuerwerke verwenden diese Steuerinformationen zur Steuerung der Teilkoppelfelder der Anschlußeinrichtungen usw..

In der genannten Offenlegungsschrift ist bereits beschrieben, daß die Anschlußgruppen einander paarweise zugeordnet sind, und daß die Anschlußeinrichtungen, die jeweils zu einer Anschlußgruppe gehören, und die im Normalbetriebszustand mit dem Teilkoppelfeld der betreffenden Anschlußgruppe verbunden sind, im Notbetriebszustand umschaltbar sind zum Teilkoppelfeld der jeweiligen Partner-Anschlußgruppe. Hierfür sind in beiden Figuren der genannten Offenlegungsschrift Umschalter dargestellt, die hier mit "1d1" bis "2d4" bezeichnet sind. Diesen entsprechende Umschalter sind in der Zeichnung mit "3ux" und "3uy" bezeichnet.

Das in der Zeichnung dargestellte Ausführungsbeispiel ist eine taktgesteuerte Zeitmultiplex-Fernmeldevermittlungsanlage, die vorzugsweise als PCM-Fernsprechvermittlungsanlage ausgebildet ist. Sie weist einen hierarchischen Aufbau mit zentralem Koppelfeld SN, zentralem Prozessor CP und mit an das Koppelfeld angeschlossenen Anschlußgruppen auf, welche also jeweils unter anderem ein Teilkoppelfeld, ein teilzentrales Steuerwerk und Anschlußeinrichtungen enthalten. Die Verbindungswege zwischen zentralem Koppelfeld und jeder der Anschlußgruppen werden hier als "Linkverbindungen" bezeichnet. Sie führen von der jeweiligen Linkumschalteinrichtung, z.B. LUX, der betreffenden Anschlußgruppe zum zentralen Koppelfeld SN. Diese Linkverbindungen sind vielkanälige Zeitmultiplexleitungen. Jeweils ein Kanalpaar dient in an sich bekannter Weise dazu, bei Verbindungsherstellung belegt zu werden, damit die gewünschte Verbindung über dieses Kanalpaar hergestellt werden kann. Dieses Kanalpaar enthält je einen Kanal in der einen Übertragungsrichtung und je einen Kanal in der anderen Übertragungsrichtung in an sich bekannter Weise.

Wie bereits ausgeführt wurde, sind an die Teilkoppelfelder der Anschlußgruppen Teilnehmerleitungen und Verbindungsleitungen über die genannten Anschlußeinrichtungen angeschlossen. Die Teilnehmerleitungen sowie die Verbindungsleitungen können in Analogtechnik sowie in Digitaltechnik ausgeführt sein.

Gemäß dem hierarchischen Aufbau steht also der zentrale Prozessor CP über die genannte Datenverbindungen mit jeder Anschlußgruppe in Verbindung. Über diese besteht jeweils ein beständiger Datenaustausch zwischen zentralem Prozessor und jedem der teilzentralen Steuerwerke in jeder der Anschlußgruppen. Dieser beständige Datenaustausch kann zeitweilig auch auf die Übertragung eines Ruhezustand-Signals beschränkt sein, und zwar in jeder der beiden Übertragungsrichtungen. An das Teilkoppelfeld einer Anschlußgruppe ist wiederum eine Mehrzahl von Anschlußeinrichtungen angeschlossen. An die Anschlußeinrichtungen können wiederum Konzentratoren und dergleichen angeschlossen sein. - Gemäß diesem hierarchischen Aufbau besteht auch ein entsprechendes Taktversorgungssystem, in dem von einem dem zentralen Prozessor zugeordneten zentralen und in bekannter Weise für dessen taktgesteuerte Funktionsabläufe maßgebenden Taktimpulsgenerator C den teilzentralen Steuerwerken einzeln zugeordnete Taktimpulssender ihren Master-Takt erhalten. Dies geschieht in an sich bekannter Weise mit Hilfe des bereits erwähnten beständigen Datenaustausches zwischen zentralem Prozessor und jedem der teilzentralen Steuerwerke, indem der betreffende Datenstrom pro Anschlußgruppe jeweils auch den betreffenden Taktimpulssendern zugeführt wird, die die Taktimpulse unbeschadet ihres informatorischen Inhalts aufnehmen und hieraus den allgemeinen Impulstakt regenerieren. Dieser Impulstakt ist in jedem der teilzentralen Steuerwerke für die darin abzuwickelnden Funktionsabläufe in bekannter Weise maßgebend. Im Falle des vorliegenden Ausführungsbeispiels ist u.a. jedem der teilzentralen Steuerwerke ein solcher Taktimpulssender GCX bzw. GCY zugeordnet. Den teilzentralen Steuerwerken sind außerdem aber auch noch weitere Taktimpulssender zugeordnet, und zwar TLX in der Linkumschalteinrichtung LUX, TX beim Teilkoppelfeld GSX und THX bei den Anschlußeinrichtungen DIU1. Entsprechendes gilt für die zweite Anschlußgruppe.

Die genannten Taktimpulssender leiten also aus dem impulstaktgesteuert übertragenen Nachrichtenstrom jeweils den Master-Takt in an sich bekannter Weise ab. Dieser Nachrichtenstrom wird - wie bereits erläutert wurde - über das Koppelfeld SN und über die über die Teilkoppelfelder verlaufenden Verbindungen geleitet. Die Taktimpulssender partizipieren an diesem Nachrichtenstrom und leiten aus ihm den Master-Takt ab und regenerieren ihn in bekannter Weise. Da das gesamte Taktsystem in ebenfalls bekannter Weise eine Organisation in Pulsrahmen aufweist mit entsprechenden Pulsrahmenkennungsbits, die den Anfang jeweils eines Pulsrahmens markieren, werden nicht nur die einzelnen Taktimpulse sondern auch die regelmäßig wiederkehrenden Pulsrahmenkennungsbits abgeleitet und regeneriert.

Wie bereits ausgeführt wurde, sind die Anschlußgruppen mit ihren Teilkoppelfeldern paarweise einander zugeordnet. Im Normalbetrieb führen die verbindungsindividuell durchschaltbaren Verbindungswege gesondert über das eine bzw. das andere der beiden Teilkoppelfelder. Dies bedeutet, daß die Verbindungswege, die über die Anschlußeinrichtungen DIU1 verlaufen, im Normalbetrieb sämtlich über das Teilkoppelfeld GSX weiterverlaufen und dann weiter über die Linkumschalteinrichtung LUX zum zentralen Koppelfeld SN. Entsprechendes gilt für die verbindungsindividiuell durchschaltbaren Verbindungswege über die Anschlußeinrichtung DIU2, das Teilkoppelfeld GSY und die Linkumschalteinrichtung LUY zum zentralen Koppelfeld SN. Im Ersatzschaltbetrieb, zu dem auch der Notbetrieb gehört, verlaufen sämtliche Verbindungen, die über die Anschlußeinrichtungen der jeweils beiden paarweise einander zugeordneten Anschlußgruppen verlaufen, über nur eines ihrer beiden Teilkoppelfelder. Bei Wechsel vom Normalbetrieb auf Ersatzschaltbetrieb werden also die genannten Verbindungswege über die genannten Anschlußeinrichtungen einer Anschlußeinrichtung von dem ihnen zugeordneten Teilkoppelfeld zum jeweiligen Partner-Teilkoppelfeld umgeschaltet, über das dann alle Verbindungswege für die Dauer des Ersatzschaltbetriebs verlaufen. Für die Umschaltung bestehen verschiedene Möglichkeiten. Es kann vorgesehen werden, eine Umschaltung nur vorzusehen für die Verbindungswegabschnitte zwischen den Anschlußeinrichtungen DIU und den Teilkoppelfeldern GS. Ebenso kann auch vorgesehen werden, eine Umschaltung nur vorzusehen für die Verbindungswegabschnitte zwischen den Teilkoppelfeldern GS und den Linkumschalteinrichtungen. Im ersteren Falle könnten diese sogar entfallen. Es besteht aber auch die Möglichkeit, Umschaltungen an beiden Stellen vorzusehen.

Es ist vorgesehen, bereits im Normalbetrieb die Teilkoppelfelder jeweils zweier einander paarweise zugeordneter Anschlußgruppen so zu steuern, daß in jedem der beiden immer sämtliche Verbindungen durchgeschaltet werden. Dies bedeutet z.B., daß in der in der Zeichnung dargestellten oberen Anschlußgruppe nicht nur diejenigen Verbindungen durchgeschaltet werden über das Teilkoppelfeld GSX, die über die Anschlußeinrichtungen DIU1 und die Linkumschalteinrichtung LUX verlaufen, sondern auch weitere Verbindungen vorbereitend für einen Wechsel auf Ersatzschaltbetrieb, und zwar für Verbindungen, die über die Anschlußeinrichtungen DIU2 und über die Linkumschalteinrichtung LUY verlaufen. Diese Verbindungen werden zur Unterscheidung auch als "Ersatzschaltbetrieb-Verbindungen" bezeichnet. Hierzu stehen die jeweils paarweise einander zugeordneten Anschlußgruppen, insbesondere deren teilzentrale Steuerwerke, in einer hier nicht im einzelnen dargestellten Weise in Verbindung miteinander zwecks gegenseitiger Übergabe von Einstellinformationen für diese Ersatzschaltbetrieb-Verbindungen.

Wie bereits ausgeführt wurde, besteht eine Linkverbindung vom Koppelfeld SN zu dem Teilkoppelfeld einer jeden Anschlußgruppe. Letzlich ist das Teilkoppelfeld über die bereits erwähnte Linkumschaltanordnung an die betreffende Linkverbindung angeschlossen. Innerhalb jeweils einer Anschlußgruppe sind mit den Linkverbindungen die betreffenden Teilnehmer- und/oder Verbindungsleitungen in an sich bekannter Weise verbindbar, wobei es sich anstatt um Leitungen im herkömmlichen Sinne (galvanische Verbindungen) auch um entsprechende Kanäle bzw. Kanalpaare handeln kann. Über die Anschlußeinrichtungen DIU1 bzw. DIU2 sind die betreffenden, im einzelnen nicht dargestellten Teilnehmer- und/oder Verbindungsleitungen mit Ausgleichsspeichern H1-H9 verbunden. Solche Ausgleichsspeicher dienen in an sich bekannter Weise einem Zeitausgleich. Solche Ausgleichsspeicher sind unter anderem in der Deutschen Offenlegungsschrift DE-A-31 04 002 dargestellt und erläutert. Sie dienen in bekannter Weise in der Zeitmultiplextechnik zur zeitlichen Anpassung der übertragenen Pulsrahmen für den Fall, daß bei der Übertragung der in Pulsrahmen fließenden Nachrichtenströme laufzeitbedingt Verzögerungen eintreten. Es ist dann erforderlich, einen taktsynchronen und pulsrahmensynchronen Gleichlauf, d.h. in beiderlei Hinsicht Synchronität wieder herzustellen. Dies wird in bekannter Weise mit Hilfe der vielfältig bekannten Ausgleichsspeicher bewerkstelligt.

Es sind nun auch im vorliegenden Falle solche Ausgleichsspeicher vorgesehen. Sie sind taktgesteuert und dienen der Aufnahme und zeitverzögerten Weitergabe der über die individuell hergestellten Verbindungen übertragenen Nachrichten. Sie werden in an sich bekannter Weise so gesteuert, daß zwischen Aufnahme und Weitergabe der Zeichen kleinstmögliche Verzugszeiten praktisch zum Tragen kommen. Wie aus der Zeichnung hervorgeht, sind über die jeweiligen Anschlußeinrichtungen DIU die genannten Teilnehmer-und/oder Verbindungsleitungen mit solchen Ausgleichsspeichern doppelt ausgestattet, indem pro Teilkoppelfeld in einer Anschlußgruppe erste dieser Ausgleichsspeicher H1 und H3 mit dem Teilkoppelfeld GSX innerhalb ein und derselben Anschlußgruppe verbunden sind, dagegen zweite Ausgleichsspeicher H2 und H4 mit dem jeweiligen Partner-Teilkoppelfeld GSY in der entsprechenden Partner-Anschlußgruppe. Die Ausgleichsspeicher nehmen die ihnen zugeführten verbindungsindividuellen Nachrichten pulsrahmenweise auf. Die Pulsrahmen folgen sukzessive nacheinander. Die aufeinander folgenden Pulsrahmen umfassen jeweils eine Vielzahl von einzelnen Verbindungen. In an sich bekannter Weise werden pro Verbindung Informationsbits verschachtelt ineinander übertragen, und diese Informationsbits sind zu Pulsrahmen zusammengefaßt.

Diese Pulsrahmen folgen sukzessive aufeinander. Die in ihnen enthaltenen Informationen gehören zu einer Vielzahl von Kanälen, bzw. über sie durchgeschalteten Verbindungen.
Die Ausgleichsspeicher nehmen nun die in den Pulsrahmen enthaltenen Informationen auf und speichern sie. Diese Vorgänge werden als "Schreibvorgänge" bezeichnet. Die Pulsrahmen werden dann mit geeigneter zeitlicher Versetzung wieder ausgelesen und zur Aussendung gebracht, wodurch in sich bekannter Weise die jeweils erforderliche Zeitanpassung bewerkstelligt wird. Bei diesen Ausgleichsspeichern finden also die Aufnahme- und Schreibvorgänge einerseits und die Lese- und Weitergabevorgänge unabhängig voneinander statt mit einer entsprechenden zeitlichen Versetzung. Die dadurch erzielbare zeitliche Anpassung betrifft sowohl die Zeitlagen der Pulsflanken der einzelnen Taktimpulse und/oder die Zeitlagen der bereits erläuterten Pulsrahmenkennungsbits, die jeweils den Anfang eines jeden Pulsrahmens markieren. Die Ausgleichsspeicher werden zweckmäßig in an sich bekannter Weise so betrieben, daß kleinstmögliche Verzugszeiten zwischen den Schreib- und den Lesevorgängen praktisch zum Tragen kommen.

Wie erläutert, sind Ausgleichsspeicher H1 bis H4 bzw. H6 bis H9 sowohl für diejenigen Verbindungswege zwischen Anschlußeinrichtungen DIU und Teilkoppelfeld GS... vorgesehen, die innerhalb ihrer eigenen Anschlußgruppe verlaufen, als auch für diejenigen Verbindungswege, die innerhalb eines Paares von Anschlußgruppen von den Anschlußeinrichtungen, z.B. DIU1, der einen Anschlußgruppe zu dem Teilkoppelfeld, z.B. GLY, der anderen Anschlußgruppe verlaufen.

Von besonderer Bedeutung ist nun die Steuerung sowohl der Aufnahme- und Schreibvorgänge als auch der Lese- und Weitergabevorgänge der Ausgleichsspeicher. Diese Vorgänge sind in an sich bekannter Weise taktgesteuert.

Zunächst werden die Aufnahme- und Schreibvorgänge erläutert. Im Nachrichtenfluß in einer ersten Übertragungsrichtung z.B. vom Teilkoppelfeld GSX zu dem an die Anschlußeinrichtungen DIU1 angeschlossenen Teilnehmer- und/oder Verbindungsleitungen liegen der oder die Ausgleichsspeicher H1. Der oder die Ausgleichsspeicher H2 liegt bzw. liegen im Nachrichtenfluß vom Teilkoppelfeld GSY der Partner-Anschlußgruppe zu den genannten Teilnehmer- und Verbindungsleitungen, die über die Anschlußeinrichtungen DIU1 angeschlossen sind. Die Ausgleichsspeicher weisen einen in der Zeichnung jeweils oberhalb von ihnen dargestellten Anschluß und einen jeweils unterhalb von ihnen dargestellten Anschluß auf. Der oberhalb dargestellte Anschluß möge die Zuführung des Impulstaktes sein für die Aufnahme- und Schreibvorgänge. Der in der Zeichnung unterhalb jedes der Ausgleichsspeicher dargestellte Anschluß möge die Zuführung sein für den Impulstakt für die Lese- und Weitergabevorgänge.

Wie nun aus der Zeichnung ersichtlich ist, werden die Aufnahme-und Schreibvorgänge der beiden Ausgleichsspeicher H1 und H2, die im Nachrichtenfluß in der genannten ersten Übertragungsrichtung vom jeweiligen Teilkoppelfeld zu den dem Anschluß der Teilnehmer-und/oder Verbindungsleitungen dienenden Anschlußeinrichtungen liegen, von einem für das jeweilige Teilkoppelfeld maßgebenden Impulstakt gesteuert. Hierzu ist der obere Anschluß des Ausgleichsspeichers H1 über die Taktleitung thx mit dem Taktimpulssender TX des Teilkoppelfeldes GSX verbunden. Der obere Anschluß des Ausgleichsspeichers H2 ist über die Taktimpulsleitung thy mit dem Taktimpulssender TY des Teilkoppelfeldes GSY verbunden. Jeder Ausgleichsspeicher wird also von einem für dasjenige Teilkoppelfeld, mit dem jener jeweils verbunden ist, maßgebenden Impulstakt gesteuert. Hierzu ist jeder dieser Ausgleichsspeicher jeweils mit einem dem betreffenden Teilkoppelfeld zugeordneten Taktimpulssender verbunden.

Im umgekehrten Nachrichtenfluß, also von den angeschlossenen Teilnehmer- und Verbindungsleitungen über die betreffenden Anschlußeinrichtungen, z.B. DIU1, zum einen oder anderen Teilkoppelfeld hin liegen die Ausgleichsspeicher H3 und H4 bzw. H8 und H9. Diese Ausgleichsspeicher werden hinsichtlich der Aufnahme- und Schreibvorgänge jeweils von einem Impulstakt gesteuert, der für die betreffende Anschlußeinrichtung, z.B. DIU1, maßgebend ist. Die Ausgleichsspeicher H3 und H4, die also zur oberen Anschlußgruppe gehören, empfangen also einen Impulstakt, der für die Anschlußeinrichtung DIU1 maßgebend ist. Es ist also dafür gesorgt, daß die Ausgleichsspeicher H3 und H4, die in der genannten zweiten Übertragungsrichtung liegen, hinsichtlich der Aufnahme- und Schreibvorgänge jeweils von dem Impulstakt gesteuert werden, der für die Anschlußeinrichtung der an das gleiche Teilkoppelfeld angeschlossenen Teilnehmer- und Verbindungsleitungen maßgebend ist. Das "gleiche Teilkoppelfeld" ist in diesem Falle dasjenige, mit dem die betreffenden Teilnehmer- und Verbindungsleitungen im Normalbetrieb verbunden sind. Es geht also um dasjenige Teilkoppelfeld und um diejenigen Teilnehmer- und Verbindungsleitungen, die zu der jeweils gleichen Anschlußgruppe gehören.

Anschließend werden für die Ausgleichsspeicher H1 bis H9 die Lese- und Weitergabevorgänge beschrieben. Bezüglich des Nachrichtenflusses in der ersten Übertragungsrichtung (vom Teilkoppelfeld zu den Anschlußeinrichtungen, an die die Teilnehmer- und Verbindungsleitungen angeschlossen sind) werden über den jeweils unteren Ausgleichsspeicher-Anschluß, der - wie bereits angegeben - der Zuführung des Impulstaktes für die Lese- und Weitergabevorgänge dient, die betreffenden Ausgleichsspeicher H1 und H2 bzw. H6 und H7 jeweils von demjenigen Impulstakt gesteuert, der auch für die Funktionsabläufe in den Anschlußeinrichtungen DIU1 bzw. DIU2 maßgebend ist. Es werden die Ausgleichsspeicher H1 und H2 hierzu von einem Taktimpulssender THX gesteuert, der den Anschlußeinrichtungen DIU2 zugeordnet ist. Entsprechendes gilt für die Ausgleichsspeicher H6 und H7, die von einem Taktimpulssender THY gespeichert werden, der den Anschlußeinrichtungen DIU2 zugeordnet ist.

Bezüglich des Nachrichtenflusses in der zweiten, also umgekehrten Übertragungsrichtung werden die betreffenden Ausgleichsspeicher, z.B. H3 und H4, die zu der in der Zeichnung im oberen Teil dargestellten Anschlußgruppe gehören, bei den betreffenden Lese-und Weitergabevorgängen unterschiedlich gesteuert. Entsprechendes gilt für die Ausgleichsspeicher H8 und H9 in der in der Zeichnung im unteren Teil dargestellten Anschlußgruppe. Der Ausgleichsspeicher H3 zum Beispiel, der in der oberen Anschlußgruppe seine Informationen innerhalb der Anschlußgruppe, d.h. zum eigenen Teilkoppelfeld hin liefert, empfängt von diesem den Impulstakt für die Lese- und Weitergabevorgänge. Hierzu ist er über die Impulstaktleitung thx mit dem Taktimpulssender TX des eigenen Teilkoppelfeldes verbunden, d.h. desjenigen Teilkoppelfeldes, das mit den Anschlußeinrichtungen DIU1, an die der oder die Ausgleichsspeicher H3 eingangsseitig angeschlossen sind, zu ein- und derselben Anschlußgruppe gehört. Entsprechendes gilt für den oder die Ausgleichsspeicher H9 in der in der Zeichnung dargestellten unteren Anschlußgruppe. Die Ausgleichsspeicher H3 und H9, die ihre Informationen jeweils zum anschlußgruppengleichen Teilkoppelfeld hin abgeben, werden auch als "erste" Ausgleichsspeicher bezeichnet. Die "zweiten" Ausgleichsspeicher H4 und H8 liefern ihre Informationen im Ersatzschaltbetrieb jeweils zum Teilkoppelfeld der Partner-Anschlußgruppe. Sie erhalten auch von hier ihren für die Lese- und Weitergabevorgänge maßgebenden Impulstakt. So erhält z.B. der zweite Ausgleichsspeicher H4, der seine Informationen bei Ersatzschaltebetrieb zum Teilkoppelfeld GSY hin liefert, seinen Impulstakt für die Lese- und Weitergabevorgänge von einem diesem Teilkoppelfeld zugehörigen Impulstaktsender TY her. Also derjenige Impulstakt, der auch für die Funktionsabläufe im Teilkoppelfeld GSY maßgebend ist, ist zugleich auch maßgebend für die Lese- und Weitergabevorgänge im zweiten Ausgleichsspeicher H4. Entsprechendes gilt für den zweiten Ausgleichsspeicher H8 in der anderen Anschlußgruppe.

Im Normalbetrieb sind die Kontakte 3ux und 3uy in der in der Zeichnung dargestellten Ruhelage. Bei Wechsel vom Normalbetrieb auf Ersatzschaltbetrieb in einer Anschlußgruppe wird der betreffende Umschaltekontakt, z.B. 3ux aus seiner dargestellten Ruhelage in die Arbeitslage umgeschaltet. Dadurch wird erreicht, daß die Verbindungen, die bis dahin über den Ausgleichsspeicher H1 und über das entsprechende Teilkoppelfeld GSX verliefen, nunmehr über den Ausgleichsspeicher H2 und das betreffende Teilkoppelfeld GSY der Partner-Anschlußgruppe verlaufen. Der Nachrichtenstrom in der anderen Übertragungsrichtung über den Ausgleichsspeicher H3 braucht nicht umgeschaltet zu werden, wie noch im einzelnen erläutert wird. Wesentlich ist im erläuterten Zusammenhang, daß die Ausgleichsspeicher H3 einerseits und H4 andererseits taktsynchron laufen mit den Teilkoppelfeldern GSX einerseits bzw. GSY andererseits. Erfolgt die Umschaltung der Verbindungen, so besteht bereits die erforderliche Synchronität. Entsprechendes gilt für die Synchronität bezüglich der Lese- und Weitergabevorgänge des Ausgleichsspeichers H8 bzw. H9 mit den Teilkoppelfeldern GSX bzw. GSY. - Die Lese- und Weitergabevorgänge z.B. des Ausgleichsspeichers H3 laufen also taktsynchron mit dem Teilkoppelfeld GSX. Ebenso laufen taktsynchron die Lese- und Weitergabevorgänge des Ausgleichsspeichers H4 mit dem Teilkoppelfeld GSY. Erfolgt nun eine Umschaltung vom Normalbetrieb auf den Ersatzschaltbetrieb, so werden durch die bestehenden Maßnahmen Phasensprünge bezüglich der Pulsflanken der Taktimpuse sowie bezüglich der Pulsrahmenkennungsbits und alle dergleichen Störungen unterbunden.

Wie bereits ausgeführt wurde, ist pro Teilkoppelfeld, z.B. GSX und Linkverbindung je eine Linkumschalteinrichtung, z.B. LUX vorgesehen. Mit Hilfe dieser Linkumschalteinrichtung ist die betreffende Linkverbindung zwischen ihr und dem Koppelfeld SN zum jeweiligen Partner-Teilkoppelfeld, z.B. GSY, umschaltbar. Die Teilkoppelfelder sind für die Anschaltung der Linkverbindungen mit ebenfalls taktgesteuerten und der Aufnahme und zeitverzögerten Weitergabe der über die individuell hergestellten Verbindungen übertragenen Nachrichten dienenden Ausgleichsspeichern E1 bis E9 ebenfalls doppelt ausgestattet. Pro Teilkoppelfeld, z.B. GSX, sind erste dieser Ausgleichsspeicher, z.B. E1 und E2, im Normalbetrieb mit der im betreffenden Teilkoppelfeld, z.B. GSX, zugeordneten Linkverbindung über die Linkumschalteinrichtung LUX verbunden. Im Normalbetrieb befindet sich der Umschalter 2ux in der in der Zeichnung dargestellten Ruhelage. Zweite Ausgleichsspeicher, z.B. E3 und E4 sind im Ersatzschaltebetrieb mit der dem jeweiligen Partner-Teilkoppelfeld, z.B. GSY, zugeordneten Linkverbindung (über LUY) verbindbar, also derjenigen Linkverbindung, die z.b. zwischen der Linkumschalteinrichtung LUY und dem Teilkoppelfeld SN verläuft. - Entsprechendes gilt umgekehrt für die andere Anschlußgruppe und ihre Umschaltmöglichkeiten.

Es ist nun vorgesehen, daß die Aufnahme- und Schreibvorgänge der verschiedenen Ausgleichsspeicher in zweckmäßiger Weise gesteuert werden. Die Aufnahme- und Schreibvorgänge derjenigen Ausgleichsspeicher, die im Nachrichtenfluß in der Übertragungsrichtung vom Teilkoppelfeld zu den Linkverbindungen liegen, werden von einem für das jeweils betreffende Teilkoppelfeld maßgebenden Impulstakt gesteuert. So werden die Aufnahme- und Schreibvorgänge der Ausgleichsspeicher E2 und E3 z.B. von dem Taktimpulssender TX her gesteuert, dessen Impulstakt für das Teilkoppelfeld GSX maßgebend ist. Die Aufnahme- und Schreibvorgänge derjenigen Ausgleichsspeicher, z.B. E1 und E4, die im Nachrichtenfluß der umgekehrten Übertragungsrichtung (also von den Linkverbindungen zum Teilkoppelfeld hin) liegen, werden getrennt von zwei verschiedenen Impulstakten gesteuert. Der erste Ausgleichsspeicher E1 wird von einem für die Linkumschalteinrichtung LUX des betreffenden Teilkoppelfeldes GSX maßgebenden Impulstakt gesteuert über die Impulstaktleitung t1, und zwar vom Taktimpulssender TLX der Linkumschalteinrichtung LUX. Der zweite Ausgleichsspeicher E4 dagegen wird von einem für die Linkumschalteinrichtung des jeweiligen Partner-Teilkoppelfeldes GSY maßgebenden Impulstakt gesteuert, und zwar über die Taktimpulsleitung ty vom Taktimpulssender TLY.

Die Aufnahme- und Schreibvorgänge des Ausgleichsspeichers G1 sind also taktsynchron mit der Linkumschalteinrichtung LUX. Die Aufnahme- und Schreibvorgänge des Ausgleichsspeichers E4 sind taktsynchron mit der Linkumschalteinrichtung LUY der Partner-Anschlußgruppe. Entsprechendes gilt umgekehrt für die andere Anschlußgruppe.

Die Lese- und Weitergabevorgänge der ersten und zweiten Ausgleichsspeicher E1 und E4, die im Nachrichtenfluß in der Übertragungsrichtung vom zentralen Koppelfeld SN zu den Teilkoppelfeldern liegen, werden von dem für das betreffende Teilkoppelfeld maßgebenden Impulstakt gesteuert. So werden die Lese- und Weitergabevorgänge des ersten Ausgleichsspeichers E2 und des zweiten Ausgleichsspeichers E4 von dem gleichen Impulstakt gesteuert, der auch für die Funktionsabläufe im Teilkoppelfeld GSX maßgebend ist. Diese Ausgleichsspeicher erhalten für ihre Lese- und Weitergabevorgänge ihren Impulstakt vom Taktimpulssender TX.

Die Ausgleichsspeicher, die in der anderen Übertragungsrichtung liegen, nämlich in der Übertragungsrichtung von den Teilkoppelfeldern zum zentralen Koppelfeld SN, werden unterschiedlich gesteuert. Dies betrifft die Ausgleichsspeicher E2 und E3. Der erste Ausgleichsspeicher E2, der also seine Informationen zur anschlußgruppen-gleichen Linkumschalteinrichtung LUX hin abgibt, wird von demjenigen Impulstakt gesteuert, der für die Linkumschalteinrichtung LUX maßgebend ist, also derjenigen Linkumschalteinrichtung, die dem betreffenden Teilkoppelfeld GSX (gemeint ist damit also das anschlußgruppen-gleiche Teilkoppelfeld) entspricht. So wird also der Ausgleichsspeicher E2 vom Taktimpulssender TLX hinsichtlich der Lese- und Weitergabevorgänge gesteuert. Der zweite Ausgleichsspeicher E3 wird dagegen von einem für die dem betreffenden Partner-Teilkoppelfeld entsprechende Linkumschalteinrichtung LUY maßgebenden Impulstakt gesteuert. Der Ausgleichsspeicher E3 wird hinsichtlich seiner Lese- und Weitergabevorgänge über die Impulstaktleitung ty vom Taktimpulssender TLY gesteuert. So werden also die beiden Ausgleichsspeicher E2 und E3, die an ein und dasselbe Teilkoppelfeld angeschlossen sind, bezüglich ihrer Lese- und Weitergabevorgänge unterschiedlich gesteuert, und zwar jeweils von dem Impulstakt jeweils derjenigen Linkumschalteinrichtung, zu der hin sie ihre ausgangsseitigen Informationen liefern.

Durch die beschriebenen Maßnahmen wird erreicht, daß es bei den Umschaltevorgängen keine Phasensprünge gibt. Hierzu arbeiten die Ausgleichsspeicher sowohl hinsichtlich ihrer Aufnahme- und Schreibvorgänge als auch hinsichtlich ihrer Lese- und Weitergabevorgänge taktsynchron und phasensynchron und synchron hinsichtlich der Pulsrahmen-Zeitmarkierungen, und zwar bezogen auf die Ausgleichsspeicher, die an ein Teilkoppelfeld angeschlossen sind und mit den Linkumschalteinrichtungen zweier verschiedener Anschlußgruppen zusammenarbeiten müssen. Treten nun laufzeitbedingte Verzögerungen ein, wodurch die Taktimpulse und die Pulsrahmengrenzen zeitlich verschoben werden können, so wird bei den beschriebenen Umschaltevorgängen vermieden, daß durch Phasensprünge Störungen in den entsprechenden Verbindungen auftreten können. Somit wird also bezüglich der betreffenden Verbindungen beim Umschalten ein Informationsverlust vermieden.

In der PCM-Technik werden nicht nur die Sprachkanäle bzw. Datenverbindungskanäle (nicht zu verwechseln mit den Datenverbindungen zwischen zentralem Prozessor CP und jedem der teilzentralen Steuerwerke GP....) vermittlungstechnisch durchgeschaltet, sondern pro Verbindung auch diesen zugeordnete Signalisierungskanäle. Mit diesen wird in entsprechender Weise wie mit den Sprachkanälen verfahren.

Taktimpulssender, die mit Hilfe eines Master-Taktes gesteuert werden, sind an sich bekannt. Hierzu ist auf die DE-A-3111022, DE-A-32 27 848 und DE-A-32 27 849 hinzuweisen. Die Taktimpulssender TLX, TX und THX in jeweils einer Anschlußgruppe können jeder für sich aus dem jeweils verfügbaren Nachrichtenstrom den Impulstakt ableiten und regenerieren. Vorzugsweise ist jedoch vorgesehen, daß dies nur der Taktimpulssender TLX tut, aber die weiteren Taktimpulssender TX, GCX und THX wiederum ihren Master-Takt vom Taktimpulssender TLX in der Weise erhalten, daß auch der Taktimpulssender THX seinen Master-Takt vom Taktimpulssender TX erhält. Hierzu sind nicht gezeigte entsprechende Taktimpulsleitungen vorgesehen. Da es nun vorkommen kann, daß z.B. das Teilkoppelfeld GSX samt seinem Taktimpulssender TX störungsbedingt ausfällt, ist vorgesehen, eine zum Taktimpulssender THX führende und ihm den erforderlichen Master-Takt zuführende Taktimpulsleitung umschaltbar zu machen mit Hilfe eines nicht gezeigten Umschalters, der dann eine Umschaltung des Mastertaktes für den Taktimpulssender THX von TX nach TY durchführt. Der Taktimpulssender THX synchronisiert sich dann auf diesen für ihn neuen Takt auf. Hierbei erfolgt insbesondere eine Aufsynchronisierung auf das Pulsrahmenkennungsbit in dem vom Taktimpulssender TY dem Taktimpulssender THX zugeführten Impulstakt.

Es ist auch noch auf eine Besonderheit in der Arbeitsweise der Umschalter 2ux und 1uy sowie 3ux und 3uy einzugehen. Der Umschalter 2ux in der Linkumschalteinrichtung LUX wird mittels eines Umschaltebefehls gesteuert, der ihm von der Linkabschlußschaltung GLX (im weiter oben genannten Beiheft mit "LIU" bezeichnet) am Teilkoppelfeld GSX der gleichen Anschlußgruppe gegeben wird. Dieser Umschaltebefehl kann darin bestehen, daß ein von der Linkabschlußschaltung oder vom Teilkoppelfeld her im Normalbetrieb über eine nicht im einzelnen gezeigte Pulsleitung ständig gelieferter Puls ausbleibt. Der Umschalter 2ux wird aber nicht alleine hierdurch gesteuert, sondern zusätzlich durch den mittels einer Impulstakt-Abtasteinrichtung R1 von dem Nachrichtenstrom abgeleiteten Impulstakt oder durch den mittels des den letzteren empfangenden Impulstaktsender TLX regenerierten Impulstakt, und zwar in der Weise, daß der Umschalter 2ux dann umgeschaltet wird, wenn nach Eintreffen des Umschaltebefehles der jeweils gerade ablaufende Taktimpuls beendet wird. Dadurch wird sichergestellt, daß auch die Umschaltung selber taktsynchron stattfindet und ein ggfs. durch Zeichenverstümmelung bedingter entsprechender Informationsverlust vermieden wird. Entsprechendes gilt für die 3ux und 3uy. Der Umschalter 3ux bei der Anschlußeinrichtung DIU1 wird mittels eines Umschaltebefehls gesteuert, der ihm von dieser Anschlußeinrichtung gegeben wird. Auch dieser Umschaltebefehl kann darin bestehen, daß ein im Normalbetrieb über eine nicht im einzelnen gezeigte Pulsleitung ständig gelieferter Puls ausbleibt. Der Umschalter 3ux wird aber nicht alleine hierdurch gesteuert, sondern zusätzlich durch den für die Anschlußeinrichtung DIU1 maßgebenden und mittels des durch den Impulstaktsender THX regenerierten Impulstakt, und zwar in der Weise, daß der Umschalter 3ux dann umgeschaltet wird, wenn nach Eintreffen des Umschaltebefehls der jeweils gerade ablaufende Taktimpuls beendet wird. Dadurch wird auch in diesem Falle sichergestellt, daß auch die Umschaltung selber taktsynchron stattfindet und ein ggfs. durch Zeichenverstümmelung bedingter entsprechender Informationsverlust vermieden wird. In diesem Zusammenhang ist gemäß der Zeichnung festzustellen, daß die ersten Ausgleichsspeicher H1 und H3 für den Normalbetrieb (also vor einer Umschaltung auf den Ersatzschaltbetrieb) und die zweiten Ausgleichsspeicher H2 und H4 für den Ersatzschaltebetrieb (nach dieser Umschaltung) vorgesehen sind, und daß für diese Umschaltung den Teilnehmer- und/oder Verbindungsleitungen Umschalter 3ux bzw. 3uy zugeordnet sind. Diese Umschalter werden nun also (in einer der Betriebsweise der Umschalter 2ux und 1ux ähnlichen Weise) in Abhängigkeit erstens von einem Umschaltebefehl, der ihnen von dem betreffenden Teilkoppelfeld bzw. dem zugeordneten Teilsteuerwerk gegeben wird, und zweitens von einem Taktsignal gesteuert, das von dem für die betreffende Anschlußeinrichtung (DIU1) maßgebenden Impulstakt (ebenso wie von dem für die dem betreffenden Teilkoppelfeld GSX zugeordnete Linkverbindung von LUX nach SN maßgebenden Impulstakt in R1) abgeleitet wird und das gewährleistet, daß die Umschaltung zwischen zwei Taktimpulsen stattfindet.

## Patentansprüche

1. Verfahren zum Betrieb von taktgesteuerten Zeitmultiplex-Fernmeldevermittlungsanlagen, insbesondere PCM-Fernsprechvermittlungsanlagen, mit hierarchischem Aufbau mit zentralem Koppelfeld (SN), zentralem Prozessor (CP), mit an jenes über Linkverbindungen angeschlossenen, einer Anschaltung von Teilnehmer- und/oder Verbindungsleitungen, bzw. -kanälen, dienenden Teilkoppelfeldern (GSX, GSY) und mit diesen zugeordneten teilzentralen Steuerwerken (GPX, GPY) und mit einem Taktversorgungssystem, in dem von einem dem Prozessor zugeordneten zentralen und für dessen taktgesteuerte Funktionsabläufe maßgebenden Taktimpulsgenerator (C) den Steuerwerken einzeln zugeordnete, der Regenerierung der Taktimpulse dienende und für die taktimpulsgesteuerten Funktionsabläufe in jedem der Steuerwerke maßgebende Taktimpulssender (GCX, GCY) ihren Master-Takt erhalten, indem sie den letzteren jeweils aus dem impulstaktgesteuert übertragenen Nachrichtenstrom der über das Koppelfeld (SN) und über die Teilkoppelfelder (GSX, GSY) verlaufenden Verbindungen ableiten und regenerieren,
und mit einer paarweisen gegenseitigen Zuordnung der Teilkoppelfelder (GSX, GSY), wobei im Normalbetrieb gesondert über das eine bzw. das andere der beiden führende Verbindungswege bei Wechsel auf Ersatzschaltbetrieb umschaltbar sind von einem der beiden Teilkoppelfelder zum jeweiligen Partner-Teilkoppelfeld, über das dann alle Verbindungswege führen,
**dadurch gekennzeichnet**,
daß jeweils einem Teilkoppelfeld (GSX, GSY) zugeordneten und über dieses mit den an dasselbe angeschlossenen Linkverbindungen verbindbaren Teilnehmer- und/oder Verbindungsleitungen, bzw. -kanäle taktgesteuerte und der Aufnahme und zeitverzögerten Weitergabe der über die individuell hergestellten Verbindungen übertragenen Nachrichten dienende Ausgleichsspeicher (H1 bis H9) in doppelter Ausstattung zugeordnet werden, indem pro Teilkoppelfeld (GSX, GSY) erste dieser Ausgleichsspeicher mit demselben verbunden und zweite Ausgleichsspeicher mit dem jeweiligen Partner-Teilkoppelfeld verbunden werden, daß die Aufnahme- und Schreibvorgänge der verschiedenen Ausgleichsspeicher, die im Nachrichtenfluß einerseits in einer ersten Übertragungsrichtung vom jeweiligen Teilkoppelfeld zu den Teilnehmer- und/oder Verbindungsleitungen, bzw. -kanälen, hin liegen, von einem für das jeweilige Teilkoppelfeld maßgebenden Impulstakt, insbesondere von einem ihm zugeordneten Taktimpulssender (TX, TY), und andererseits im Nachrichtenfluß einer zweiten, umgekehrten Übertragungsrichtung liegen, von einem Impulstakt gesteuert werden, der für eine Leitungsanschlußeinrichtung (DIU1, DIU2) der an das gleiche Teilkoppelfeld (GSX, GSY) angeschlossenen Teilnehmer-und/oder Verbindungsleitungen, bzw. -kanälen, maßgebend ist, insbesondere von einem dieser Leitungsanschlußeinrichtung zugeordneten Taktimpulssender (TAX, TAY), und daß die Lese- und Weitergabevorgänge der ersten und zweiten Ausgleichsspeicher (H1 bis H9) einerseits bezüglich des Nachrichtenflusses in der ersten Übertragungsrichtung von dem letztgenannten Impulstakt und andererseits bezüglich des Nachrichtenflusses in der zweiten, also umgekehrten Übertragungsrichtung unterschiedlich gesteuert werden, und zwar in der Weise, daß hierbei der betreffende erste Ausgleichsspeicher (H3, H9) von dem für das jeweilige eigene Teilkoppelfeld (GSX, GSY) maßgebenden Impulstakt, insbesondere von dem ihm zugeordneten Taktimpulssender (TX, TY), und der betreffende zweite Ausgleichsspeicher (H4, H8) von dem für das Partner-Teilkoppelfeld (GSX, GSY) maßgebenden Impulstakt, insbesondere von dem ihm zugeordneten Taktimpulssender (TX, TY) gesteuert wird.

2. Verfahren nach Anspruch 1,
**dadurch gekennzeichnet,**
daß die ersten Ausgleichsspeicher (H3, H9) für den Normalbetrieb vor einer Umschaltung auf den Ersatzschaltbetrieb und die zweiten Ausgleichsspeicher (H4, H8) für den Ersatzschaltbetrieb nach dieser Umschaltung vorgesehen sind, und daß für diese Umschaltung den Teilnehmer- und/oder Verbindungsleitungen Umschalter (3ux, 3uy) zugeordnet werden.

3. Verfahren nach Anspruch 1,
**dadurch gekennzeichnet,**
daß die Umschalter (3ux, 3uy) in Abhängigkeit erstens von einem Umschaltebefehl, der ihnen von dem betreffenden Teilkoppelfeld (GSX, GSY) gegeben wird, und zweitens von einem Taktsignal gesteuert werden, das von dem für die betreffende Leitungsanschlußeinrichtung maßgebenden Impulstakt abgeleitet wird, und das gewährleistet, daß die Umschaltung zwischen zwei Taktimpulsen stattfindet.

4. Verfahren zum Betrieb von taktgesteuerten Zeitmultiplex-Fernmeldevermittlungsanlagen, insbesondere PCM-Fernsprechvermittlungsanlagen, mit hierarchischem Aufbau mit zentralem Koppelfeld (SN), zentralem Prozessor (CP), mit an jenes über Linkverbindungen angeschlossenen, einer Anschaltung von Teilnehmer- und/oder Verbindungsleitungen, bzw. -kanälen, dienenden Teilkoppelfeldern (GSX, GSY) und mit diesen zugeordneten teilzentralen Steuerwerken (GPX, GPY) und mit einem Taktversorgungssystem, in dem von einem dem Prozessor (CP) zugeordneten zentralen und für dessen taktgesteuerte Funktionsabläufe maßgebenden Taktimpulsgenerator (C) den Steuerwerken (GPX, DPY) einzeln zugeordnete, der Verstärkung Regenerierung der Taktimpulse dienende und für die taktimpulsgesteuerten Funktionsabläufe in jedem der Steuerwerke maßgebende Taktimpulssender (TLX, TLY) ihren Mastertakt erhalten, indem sie den letzteren jeweils aus dem impulstaktgesteuert übertragenen Nachrichtenstrom der über das Koppelfeld (SN) und über die Teilkoppelfelder (GSX, GSY) durchgeschalteten Verbindungen ableiten und regenerieren, und mit einer paarweisen gegenseitigen Zuordnung der Teilkoppelfelder, wobei im Normalbetrieb in gesondert über das eine bzw. das andere der beiden führende Verbindungswege bei Wechsel auf Ersatzschaltbetrieb umschaltbar sind von einem der beiden Teilkoppelfelder zum jeweiligen Partner-Teilkoppelfeld, über das dann alle Verbindungswege führen,
**dadurch gekennzeichnet**,
daß mittels einer pro Teilkoppelfeld und Linkverbindung vorgesehenen Umschalteinrichtung (LUX, LUY) jene vom zugeordneten Teilkoppelfeld (GSX, GSY) zum jeweiligen Partner-Teilkoppelfeld umschaltbar ist, daß die Teilkoppelfelder für die Anschaltung der Linkverbindungen mit taktgesteuerten und der Aufnahme und zeitverzögerten Weitergabe der über die individuell hergestellten Verbindungen übertragenen Nachrichten dienenden Ausgleichsspeichern (H1 bis H9) doppelt ausgestattet sind, indem pro Teilkoppelfeld erste dieser Ausgleichsspeicher (H3, H9) im Normalbetrieb mit der demselben Teilkoppelfeld zugeordneten Linkverbindung über dessen Umschalteinrichtung verbunden und zweite Ausgleichsspeicher im Ersatzschaltebetrieb mit der dem jeweiligen Partner-Teilkoppelfeld zugeordneten Linkverbindung verbindbar sind,
daß die Schreibvorgänge der verschiedenen Ausgleichsspeicher, die im Nachrichtenfluß einerseits in einer ersten Übertragungsrichtung vom jeweiligen Teilkoppelfeld zu den Linkverbindungen hin liegen, von einem für dasselbe maßgebenden Impulstakt, insbesondere von einem diesem Teilkoppelfeld zugeordneten Taktimpulssender (Tx, Ty), gesteuert werden und andererseits im Nachrichtenfluß der umgekehrten, also einer zweiten Übertragungsrichtung liegen, getrennt von zwei verschiedenen Impulstakten gesteuert werden, indem dabei einer erster Ausgleichsspeicher (H3, H9) von einem für die Umschalteinrichtung des betreffenden Teilkoppelfeldes maßgebenden Impulstakt, insbesondere von einem ihr zugeordneten Taktimpulssender und ein zweiter Ausgleichsspeicher (H4, H8) von einem für die Umschalteinrichtung (LUX, LUY) des jeweiligen Partner-Teilkoppelfeldes (GSX, GSY) maßgebenden Impulstakt, insbesondere von einem ihr zugeordneten Taktimpulssender (TX, TY) gesteuert werden, und daß die Lese- und Weitergabevorgänge der ersten und zweiten Ausgleichsspeicher in einem Teilkoppelfeld einerseits bezüglich des Nachrichtenflusses in der zweiten Übertragungsrichtung von einem für das betreffende Teilkoppelfeld maßgebenden Impulstakt, insbesondere von einem ihm zugeordneten Taktimpulssender und andererseits bezüglich des Nachrichtenflusses in der ersten Übertragungsrichtung unterschiedlich gesteuert werden, und zwar in der Weise, daß hierbei der betreffende erste Ausgleichsspeicher (H3, H9) von einem für die dem betreffenden Teilkoppelfeld entsprechende Umschalteinrichtung maßgebenden Impulstakt, insbesondere von einem ihr zugeordneten Taktimpulssender (TX, TY), und der betreffende zweite Ausgleichsspeicher (H4, H8) von einem für die dem Partner-Teilkoppelfeld entsprechende Umschalteinrichtung (LUX, LUY) maßgebenden Impulstakt, insbesondere von einem ihr zugeordneten Taktimpulssender gesteuert wird.

5. Verfahren nach Anspruch 4,
**dadurch gekennzeichnet,**
daß die Umschalteinrichtung (LUX, LUY) in Abhängigkeit erstens von einem Umschaltebefehl, der ihnen von dem betreffenden Teilkoppelfeld (GSX, GSY) gegeben wird, und zweitens von einem Taktsignal gesteuert wird, das von dem für die dem betreffenden Teilkoppelfeld zugeordnete Linkverbindung maßgebenden Impulstakt abgeleitet wird, und das gewährleistet, daß die Umschaltung zwischen zwei Taktimpulsen stattfindet.

## Claims

1. Method for operating clock-controlled time-division multiplex telecommunication exchanges, preferably PCM telephone exchanges, with hierarchical structure having central switching network (SN), central processor (CP), having subswitching networks (GSX, GSY) connected thereto via link connections and serving to connect subscriber lines and/or interexchange trunk lines or channels and having intermediate level control units (GPX, GPY) assigned thereto, and having a clock supply system in which clock pulse transmitters (GCX, GCY), which are assigned individually to the control units, serve for the regeneration of the clock pulses and govern the clock-pulse-controlled function sequences in each of the control units, receive their master clock from a central clock pulse generator (C) assigned to the processor and governing its clock-controlled function sequences, in that they derive and regenerate said master clock in each case from the message stream, transmitted under pulse clock control, of the connections proceeding via the switching network (SN) and via the subswitching networks (GSX, GSY), and having a mutual assignment of the subswitching networks (GSX, GSY) in pairs, it being possible, given a switchover to standby operation, to switch over connection paths leading in normal operation separately via the one or the other of the two from one of the two subswitching networks to the respective partner subswitching network, via which all connection paths then lead, characterized in that clock-controlled compensation buffers (H1 to H9) in duplicate configuration which serve for the acquisition and time-delayed forwarding of the messages transmitted via the individually established connections are assigned in each case to subscriber lines and/or interexchange trunk lines or channels which are assigned to a subswitching network (GSX, GSY) and can be connected via the latter to the link connections connected to the same, in that for each subswitching network (GSX, GSY) first of said compensation buffers are connected to the same and second compensation buffers are connected to the respective partner subswitching network, in that the acquisition and write operations of the various compensation buffers, lying in the message stream on the one hand in a first transmission direction from the respective subswitching network to the subscriber lines and/or interexchange trunk lines or channels, are controlled by a pulse clock governing the respective subswitching network, preferably from a clock pulse transmitter (TX, TY) assigned thereto, and on the other hand lying in the message stream of a second, opposite transmission direction, are controlled by a pulse clock governing a line interface unit (DIU1, DIU2) of the subscriber lines and/or interexchange trunk lines or channels connected to the same subswitching network (GSX, GSY), preferably from a clock pulse transmitter (TAX, TAY) assigned to said line interface unit, and in that the read and forwarding operations of the first and second compensation buffers (H1 to H9) are controlled differently on the one hand with respect to the message stream in the first transmission direction by the last-mentioned pulse clock and on the other hand with respect to the message stream in the second, that is to say opposite, transmission direction, to be precise in such a manner that in this case the respective first compensation buffer (H3, H9) is controlled by the pulse clock governing its respective own subswitching network (GSX, GSY), preferably from the clock pulse transmitter (TX, TY) assigned thereto, and the respective second compensation buffer (H4, H8) is controlled by the pulse clock governing the partner subswitching network (GSX, GSY), preferably from the clock pulse transmitter (TX, TY) assigned thereto.

2. Method according to Claim 1, characterized in that the first compensation buffers (H3, H9) are provided for the normal operation before a changeover to the standby operation and the second compensation buffers (H4, H8) are provided for the standby operation after said changeover, and in that changeover switches (3ux, 3uy) are assigned to the subscriber lines and/or inter-exchange trunk lines for said changeover.

3. Method according to Claim 1, characterized in that the changeover switches (3ux, 3uy) are controlled depending firstly on a changeover command given to them by the respective subswitching network (GSX, GSY) and secondly on a clock signal which is derived from the pulse clock governing the respective line interface unit and which ensures that the changeover takes place between two clock pulses.

4. Method for operating clock-controlled time-division multiplex telecommunication exchanges, preferably PCM telephone exchanges, with hierarchical structure having central switching network (SN), central processor (CP), having subswitching networks (GSX, GSY) connected thereto via link connections and serving to connect subscriber lines and/or interexchange trunk lines or channels and having intermediate level control units (GPX, GPY) assigned thereto, and having a clock supply system in which clock pulse transmitters (TLX, TLY), which are assigned individually to the control units (GPX, DPY), serve for the amplified regeneration of the clock pulses and govern the clock-pulse-controlled function sequences in each of the control units, receive their master clock from a central clock pulse generator (C) assigned to the processor (CP) and governing its clock-controlled function sequences, in that they derive and regenerate said master clock in each case from the message stream, transmitted under pulse clock control, of the connections switched through via the switching network (SN) and via the subswitching networks (GSX, GSY), and having a mutual assignment of the subswitching networks in pairs, it being possible, given a switchover to standby operation, to switch over connection paths leading in normal operation separately via the one or the other of the two from one of the two subswitching networks to the respective partner subswitching network, via which all connection paths then lead, characterized in that, by means of a changeover device (LUX, LUY) provided for each subswitching network and link connection, the latter can be switched over from the assigned subswitching network (GSX, GSY) to the respective partner subswitching network, in that for the connection of the link connections, the subswitching networks are equipped in duplicate with clock-controlled compensation buffers (H1 to H9) serving for the acquisition and time-delayed forwarding of the messages transmitted via the individually established connections, in that for each subswitching network in normal operation first of said compensation buffers (H3, H9) are connected to the link connection assigned to the same subswitching network via the changeover device thereof, and in standby operation second compensation buffers can be connected to the link connection assigned to the respective partner subswitching network, in that the write operations of the various compensation buffers, lying in the message stream on the one hand in a first transmission direction from the respective subswitching network to the link connections, are controlled by a pulse clock governing the same, preferably from a clock pulse transmitter (Tx, Ty) assigned to said subswitching network, and on the other hand lying in the message stream of the opposite, that is to say a second transmission direction, are controlled separately by two different pulse clocks, in that in this case a first compensation buffer (H3, H9) is controlled by a pulse clock governing the changeover device of the respective subswitching network, preferably from a clock pulse transmitter assigned thereto, and a second compensation buffer (H4, H8) is controlled by a pulse clock governing the changeover device (LUX, LUY) of the respective partner subswitching network (GSX, GSY), preferably from a clock pulse transmitter (TX, TY) assigned thereto, and in that the read and forwarding operations of the first and second compensation buffers in a subswitching network are controlled differently on the one hand with respect to the message stream in the second transmission direction by a pulse clock governing the respective subswitching network, preferably from a clock pulse transmitter assigned thereto, and on the other hand with respect to the message stream in the first transmission direction, to be precise in such a manner that in this case the respective first compensation buffer (H3, H9) is controlled by a pulse clock governing the changeover device corresponding to the respective subswitching network, preferably from a clock pulse transmitter (TX, TY) assigned thereto, and the respective second compensation buffer (H4, H8) is controlled by a pulse clock governing the changeover device (LUX, LUY) corresponding to the partner subswitching network, preferably from a clock pulse transmitter assigned thereto.

5. Method according to Claim 4, characterized in that the changeover device (LUX, LUY) is controlled depending firstly on a changeover command given to it by the respective subswitching network (GSX, GSY) and secondly on a clock signal which is derived from the pulse clock governing the link connection assigned to the respective subswitching network and which ensures that the changeover takes place between two clock pulses.

## Revendications

1. Procédé pour faire fonctionner des installations de commutation de télécommunication à multiplexage temporel commandées de façon cadencée, notamment des installations de commutation téléphonique MIC, à structure hiérarchisée comprenant un champ de couplage central (SN), un processeur central (CP), des champs de couplage partiels (GSX,GSY), reliés à ce processeur par l'intermédiaire de lignes de raccordement et utilisés pour le raccordement de lignes d'abonnés et/ou de lignes ou de canaux de jonction, et des unités de commande (GPX, GPY) partiellement centrales (GPX, GPY) associées à ces champs de couplage partiels et un système d'alimentation de cadence, dans lequel des émetteurs d'impulsions de cadence (GCX,GCY), qui sont associés individuellement aux unités de commande par un générateur central d'impulsions de cadence (C) associé au processeur et déterminant pour les cycles fonctionnels, commandés de façon cadencée, de ce processeur, qui servent à la régénération des impulsions de cadence et qui sont déterminants pour les cycles fonctionnels, commandés par les impulsions de cadence, dans chacune des unités de commande, reçoivent leur cadence pilote par le fait qu'ils dérivent et régénèrent cette cadence pilote respectivement à partir du flux d'informations, transmis d'une manière commandée de façon cadencée par des impulsions, des liaisons qui passent par le champ de couplage (SN) et par les champs de couplage partiels (GSX,GSY), et
comportant une association réciproque, par couples, des champs de couplage partiels (GSX,GSY), auquel cas, en fonctionnement normal, des voies de liaison, qui passent séparément par l'un ou l'autre des deux champs de couplage partiels, peuvent être commutées, lors du passage au fonctionnement en circuit de remplacement, de l'un des deux champs de couplage partiels au champ de couplage partiel partenaire respectif, par l'intermédiaire duquel passent alors toutes les voies de liaison,
caractérisé par le fait que des mémoires de compensation (H1 à H9), qui sont commandées de façon cadencée et qui servent à recevoir et à retransmettre d'une manière retardée les informations transmises par l'intermédiaire des liaisons établies individuellement, sont prévues en double en étant associées à des lignes d'abonnés et/ou des lignes ou des canaux de jonction, associés respectivement à un champ de couplage partiel (GSX,GSY), et pouvant être reliées, par l'intermédiaire de ce dernier, aux lignes de raccordement reliées à ce champ de couplage partiel, par le fait que pour chaque champ de couplage partiel (GSX,GSY), des premières de ces mémoires de compensation sont reliées au même champ de couplage partiel et des secondes mémoires de compensation sont reliées au champ de couplage partiel partenaire respectif, que les opérations de réception et d'enregistrement dans les différentes mémoires de compensation, qui sont dans le flux d'informations, d'une part dans un premier sens de transmission allant du champ de couplage partiel respectif au lignes d'abonnés et/ou aux lignes ou aux canaux de jonction, sont commandées par une cadence d'impulsions, qui est déterminante pour le champ de couplage partiel respectif, notamment par un émetteur d'impulsions de cadence (TX,TY) qui est associé à ce champ de couplage partiel, et d'autre part, les opérations de réception et d'enregistrement des différentes mémoires de compensation, qui sont dans le flux d'informations d'un second sens de transmission inverse, sont commandées par une cadence d'impulsions, qui est déterminante pour un dispositif de raccordement de ligne (DIU1,DIU2) des lignes d'abonnés et/ou des lignes ou des canaux de jonction, qui sont reliés au même champ de couplage partiel (GSX,GSY), notamment par un émetteur d'impulsions de cadence (TAX,TAY), qui est associé à ce dispositif de raccordement de ligne, et que les opérations de lecture et de restitution des première et seconde mémoires de compensation (H1 à H9) sont commandées différemment d'une part, en rapport avec le flux d'informations dans le premier sens de transmission, par la cadence d'impulsions indiquée en dernier lieu et, d'autre part, en ce qui concerne le flux d'informations dans le second sens de transmission (c'est-à-dire inverse), et ce de telle sorte que la première mémoire de compensation considérée (H3,H9) est commandée par la cadence impulsionnelle, qui est déterminante pour le champ de couplage partiel respectif (GSX,GSY), notamment par l'émetteur d'impulsions de cadence (TX,TY), qui lui est associé, et la seconde mémoire de compensation considérée (H4,H8) est commandée par la cadence impulsionnelle, qui est déterminante pour le champ de couplage partiel partenaire (GSX,GSY), notamment par l'émetteur d'impulsions de cadence (TX,TY), qui lui est associé.

2. Procédé selon la revendication 1,
caractérisé en ce que les premières mémoires de compensation (H3,H9) sont prévues pour le fonctionnement normal avant une commutation sur le fonctionnement en circuit de remplacement et les secondes mémoires de compensation (H4,H8) sont prévues pour le fonctionnement en circuit de remplacement après cette commutation, et que pour cette commutation, des commutateurs (3ux,3uy) sont associés aux lignes d'abonnés et/ou aux lignes de jonction.

3. Procédé suivant la revendication 1,
caractérisé par le fait que les commutateurs (3ux,3uy) sont commandés en fonction, d'une part, d'une instruction de commutation, qui leur est appliquée par le champ de couplage partiel concerné (GSX,GSY), et, d'autre part, d'un signal de cadence, qui est dérivé de la cadence d'impulsion qui est déterminante pour le dispositif de raccordement de ligne concerné, et qui garantit que la commutation est exécutée entre deux impulsions de cadence.

4. Procédé d'exploitation d'installations de commutation de télécommunication à multiplexage temporel commandé de façon cadencée notamment des installations de commutation téléphonique MIC, à structure hiérarchisée comprenant un champ de couplage central (SN), un processeur central (CP), des champs de couplage partiels (GSX,GSY), reliés à ce processeur par l'intermédiaire de lignes de raccordement et utilisés pour le raccordement de lignes d'abonnés et/ou de lignes ou de canaux de jonction, et des unités de commande (GPX, GPY) partiellement centrales associées à ces champs de couplage partiels et un système d'alimentation d'une cadence, dans lequel des émetteurs d'impulsions de cadence (TLX,TLY), qui sont associés individuellement aux unités de commande (GPX, GPY) par un générateur central d'impulsions de cadence (C), qui est associé au processeur (CP) et qui est déterminant pour les cycles fonctionnels, commandés de façon cadencée, de ce processeur, et qui réalisent l'amplification et la régénération des impulsions de cadence et qui sont déterminants pour les cycles fonctionnels, commandés par les impulsions de cadence, dans chacune des unités de commande, reçoivent leur cadence pilote par le fait qu'ils dérivent et régénèrent cette cadence pilote respectivement à partir du flux d'informations, transmis d'une manière commandée de façon cadencée par des impulsions, des liaisons qui passent par le champ de couplage (SN) et par les champs de couplage partiels, ces installations comportent en outre une association réciproque, par couples, des champs de couplage partiels, auquel cas, pendant le fonctionnement normal, des voies de liaison, qui passent séparément par l'un ou l'autre des deux champs de couplage partiels, peuvent être commutées, lors du passage au fonctionnement en circuit de remplacement, de l'un des deux champs de couplage partiels au champ de couplage partiel partenaire respectif, par l'intermédiaire duquel passent alors toutes les voies de liaison,
caractérisé par le fait qu'au moyen d'un dispositif de commutation (LUX,LUY) prévu pour chaque champ de couplage partiel et pour chaque liaison de raccordement, cette liaison peut être commutée du champ de couplage partiel associé (GSX,GSY) au champ de couplage partenaire respectif, que les champs de couplage partiels pour le raccordement des liaisons de raccordement sont munis en double de mémoires de compensation (H1 à H9) commandées de façon cadencée et servant à recevoir et retransmettre d'une manière retardée les informations transmises par l'intermédiaire des liaisons établies individuellement, par le fait que pour chaque champ de couplage partiel, des premières de ces mémoires de compensation (H3,H9) sont connectées, en fonctionnement normal, à la liaison de raccordement associée au même champ de couplage partiel, par l'intermédiaire du dispositif de commutation de ce champ de couplage partiel et que des secondes mémoires de compensation peuvent être connectées à la liaison de raccordement associée au champ de couplage partiel partenaire respectif,
que les opérations d'enregistrement des différentes mémoires de compensation, qui, d'une part, sont situées dans le flux d'informations dans le premier sens de transmission allant du champ de couplage partiel respectif en direction des liaisons de raccordement, sont commandées par une cadence d'impulsions déterminante pour ce champ de couplage partiel, notamment par un émetteur d'impulsions de cadence (Tx,Ty) associé à ce champ de couplage partiel, et que les opérations d'enregistrement des mémoires de compensation, qui, d'autre part, sont situées dans le flux d'informations possédant le sens de transmission inverse, c'est-à-dire un second sens de transmission, sont commandées séparément par deux cadences d'impulsions différentes par le fait qu'une première mémoire de compensation (H3,H9) est commandée par une cadence d'impulsions, qui est déterminante pour le dispositif de commutation du champ de couplage partiel concerné, notamment par un émetteur d'impulsions de cadence associé à ce dispositif de commutation, et qu'une seconde mémoire de compensation (H4,H8) est commandée par une cadence d'impulsions qui est déterminante pour le dispositif de commutation (LUX,LUY) du champ de couplage partiel partenaire respectif (GSX,GSY), notamment par un émetteur d'impulsions de cadence (TX,TY) associé à ce dispositif de commutation, et que les opérations de lecture et de transmission des première et seconde mémoires de compensation sont commandées, différemment dans un champ de couplage partiel, d'une part dans le second sens de transmission, en rapport avec le flux d'informations par une cadence d'impulsions déterminante pour le champ de couplage partiel concerné, notamment par un émetteur d'impulsions de cadence, qui lui est associé, et d'autre part, par rapport au flux d'informations dans le premier sens de transmission, et ce de telle sorte que la première mémoire de compensation concernée (H3,H9) est commandée par une cadence d'impulsions, qui est déterminante pour le dispositif de commutation correspondant au champ de couplage partiel concerné, notamment par un émetteur d'impulsions de cadence (TX,TY), qui est associé à ce dispositif de commutation, et que la seconde mémoire de compensation respective concernée (H4,H8) est commandée par une cadence d'impulsions, qui est déterminante pour le dispositif de commutation (LUX,LUY), qui correspond au champ de couplage partiel partenaire, notamment par un émetteur d'impulsions de cadence qui est associé à ce dispositif de commutation.

5. Procédé suivant la revendication 4,
caractérisé par le fait que le dispositif de commutation (LUX,LUY) est commandé, en fonction, d'une part, d'une instruction de commutation qui lui est appliquée par le champ de couplage partiel concerné (GSX,GSY), et en second lieu par un signal de cadence, qui est dérivé de la cadence d'impulsions qui est déterminante pour la liaison de raccordement associée au champ de couplage partiel concerné, et qui garantit que la commutation intervient entre deux impulsions de cadence.
